# EUROPÄISCHE PATENTSCHRIFT

(11) **EP 1 559 263 B1**
(45) Veröffentlichungstag und Bekanntmachung des Hinweises auf die Patenterteilung: **31.10.2007**
(21) Anmeldenummer: 03809699.6
(22) Anmeldetag: 17.07.2003
(51) Int. Cl.: H04M 3/24, H04Q 1/20, H04M 15/00

(54) **VERFAHREN UND PRÜFVORRICHTUNG ZUM ÜBERPRÜFEN DER ENTGELTABRECHNUNG FÜR EINE KOMMUNIKATIONSVERBINDUNG NACH ZEITTAKTINTERVALLEN**
METHOD AND TESTING DEVICE FOR VERIFYING THE CHARGE INVOICING FOR A COMMUNICATIONS CONNECTION ACCORDING TO TIME UNIT INTERVALS
PROCEDE ET DISPOSITIF DE VERIFICATION UTILISES POUR VERIFIER LA TAXATION D'UNE COMMUNICATION SELON DES INTERVALLES D'IMPULSIONS D'HORLOGE

(30) Priorität: 31.10.2002 DE 10251143
(43) Veröffentlichungstag der Anmeldung: 03.08.2005
(73) Patentinhaber: Deutsche Telekom AG, 53113 Bonn (DE)
(72) Erfinder: SCHMIDT, Monika, 90402 Nürnberg (DE); SCHNEIDER, Ernst, 90579 Langenzenn (DE)
(86) Internationale Anmeldenummer: PCT/DE2003/002394
(87) Internationale Veröffentlichungsnummer: WO 2004/040888

(56) Entgegenhaltungen:
- FR-A- 2 538 198
- FR-A- 2 541 541
- US-A- 4 263 482

## Beschreibung

Die Erfindung betrifft eine Prüfvorrichtung und ein Verfahren zum Überprüfen der Entgeltabrechnung für eine Kommunikationsverbindung nach Zeittaktintervallen, wobei eine Prüfeinrichtung, welche wenigstens eine rufende, analoge Endeinrichtung und wenigstens eine gerufene Endeinrichtung simulieren kann, an wenigstens einem Netzknoten angeschlossen ist, der Zeittaktimpulse erzeugt.

Analoge Telekommunikationsnetze zeichneten sich unter anderem dadurch aus, dass die Entgeltabrechnung einer Kommunikationsverbindung nach Zeittaktintervallen erfolgte. Eine solche Entgeltabrechnung ist auch heute im Zeitalter digitaler Kommunikationsnetze notwendig, wenn als rufende Endeinrichtung analoge Endgeräte, wie zum Beispiel Münzfernsprecher eingesetzt werden.

Um den Preis einer Kommunikationsverbindung nach Zeittaktintervallen ermitteln zu können, erzeugt ein vermittelnder Netzknoten, mit welchem die rufende Endeinrichtung verbunden ist, Zeittaktimpulse. Der vermittelnde Netzknoten kann die erzeugten Impulse zum Zweck der Entgeltabrechnung zur rufenden Endeinrichtung übertragen, wenn es sich bei dieser beispielsweise um einen Münzfernsprecher handelt. Jeder Impuls entspricht einem bestimmten Geldwert. Der jeweils fällige Verbindungspreis pro Zeiteinheit kann durch Wahl des zeitlichen Abstands aufeinanderfolgender Impulse festgelegt werden.

Vorraussetzung für eine korrekte Entgeltabrechnung nach Zeittaktintervallen ist, dass
a) die Differenz zwischen der Länge des vertraglich vereinbarten Zeittaktintervalls und der Länge des in Rechnung gestellten Zeittaktintervalls einen vorbestimmten Wert, der in der Regel kleiner als eine Sekunde ist, nicht überschreitet,
b) der erste Impuls innerhalb einer vorbestimmten Zeitspanne nach dem Beginn der Kommunikationsverbindung im Netzknoten erzeugt wird, und dass
c) nach Beendigung der Kommunikationsverbindung höchstens y Zeittaktimpulse erzeugt werden, wobei der letzte Zeittaktimpuls nur innerhalb einer vorbestimmten Zeitspanne erzeugt werden darf.

Bisher gibt es keine Prüfverfahren und Prüfsysteme, mit denen eine Verbindungspreisberechnung nach Zeittaktintervallen validiert werden kann.

Der Erfindung liegt somit das Problem zugrunde, ein Verfahren und eine Prüfvorrichtung zum Überprüfen der Entgeltabrechnung für eine Kommunikationsverbindung nach Zeittaktintervallen zur Verfügung zu stellen.

Das Problem löst die Erfindung zum einen durch die Verfahrensschritte gemäß Anspruch 1.

Das Verfahren bedient sich einer Prüfeinrichtung, welche wenigstens eine rufende, analoge Endeinrichtung und wenigstens eine gerufene Endeinrichtung simulieren kann und an wenigstens einem Netzknoten angeschlossen ist, der Zeittaktimpulse erzeugt. Der Netzknoten ist üblicherweise ein analoger oder digitaler vermittelnder Netzknoten. Mit dem Prüfverfahren kann wenigstens eine vorbestimmte Test-Kommunikationsverbindung über den Netzknoten auf- und wieder abgebaut werden.

Zunächst wird der zeitliche Abstand zwischen dem Beginn der Test-Kommunikationsverbindung und dem Erzeugen eines ersten Zeittaktimpulses im Netzknoten ermittelt und geprüft, ob der ermittelte zeitliche Abstand innerhalb eines ersten vorbestimmten Zeitbereichs liegt.

Während der bestehenden Test-Kommunikationsverbindung werden Zeittaktintervalle aufeinanderfolgender Zeittaktimpulse gemessen und mit einem vorbestimmten Zeitintervall verglichen. Zweckmäßigerweise werden alle zwischen Beginn und Ende der Test-Kommunikationsverbindung anfallenden Zeittaktintervalle gemessen.

Ferner wird geprüft, ob nach dem Ende der Test-Kommunikationsverbindung wenigstens ein weiterer Zeittaktimpuls empfangen worden ist. Wenn dies der Fall ist, wird der zeitliche Abstand zwischen dem Ende der Test-Kommunikationsverbindung und dem wenigstens einen Zeittaktimpuls ermittelt. Dann wird geprüft, ob der ermittelte zeitliche Abstand innerhalb eines zweiten vorbestimmten Zeitbereichs liegt. ,

Vorteilhafte Weiterbildungen sind Gegenstand der Unteransprüche.

Der zeitliche Abstand zwischen dem Beginn der Test-Kommunikationsverbindung und dem Erzeugen des ersten Zeittaktimpulses wird durch folgende Schritte gemessen: Das Auftreten eines ersten vorbestimmten Ereignisses (connect; Schleifenschluss), welches dem messbaren Beginn der Test-Kommunikationsverbindung entspricht, wird an einem ersten vorbestimmten Messpunkt der Prüfeinrichtung erkannt.

Der Empfang des ersten, vom Netzknoten erzeugten Zeittaktimpulses der Test-Kommunikationsverbindung wird an einem zweiten vorbestimmten Messpunkt der Prüfeinrichtung erkannt.
Eine Zeitmessung wird in Abhängigkeit von dem erkannten Auftreten des ersten vorbestimmten Ereignisses (connect; Schleifenschluss) und dem Empfang des ersten Zeittaktimpulses gestartet bzw. gestoppt.

Vorzugsweise liegt der erste Messpunkt in der gerufenen Endeinrichtung und der zweite Messpunkt in der rufenden analogen Endeinrichtung. Bei dem am ersten Messpunkt erfassten Ereignis kann es sich im Fall einer digitalen gerufenen Endeinrichtung um die Protokollnachricht "connect" oder bei einer analogen gerufenen Endeinrichtung um die Bildung eines Schleifenschlusses handeln.

Da der erste und zweite Messpunkt entfernt vom Netzknoten angeordnet sind, fallen das Auftreten des tatsächlichen Ereignisses "Verbindungsbeginn", welches an einer Schnittstelle des Netzknotens sein kann, und das Erfassen des an dem ersten Messpunkt erkannten Ereignisses "Verbindungsbeginn" zeitlich auseinander. Ebenso fallen der Empfang des ersten Zeittaktimpulses am zweiten Messpunkt und das tatsächliche Erzeugen des ersten Zeittaktimpulses im Netzknoten zeitlich auseinander. Diese zeitlichen Abweichungen werden als systematische Messfehler zwischen dem Ort eines tatsächlichen Ereignisses und dem ersten bzw. zweiten Messpunkt, welcher dieses Ereignis erkennt, bezeichnet. Der systematische Messfehler ist abhängig von der gewählten Testprozedur und muss somit für jedes Testszenario ermittelt werden.

Um die Messgenauigkeit des Prüfverfahrens zu erhöhen, wird der systematische zeitliche Messfehler zwischen dem Ort eines tatsächlichen Ereignisses, welcher eine Schnittstelle des Netzknotens sein kann, und dem jeweiligen vorbestimmten Messpunkt ermittelt, welcher dieses Ereignis erkennt.

Hierzu wird beispielsweise der systematische Messfehler zwischen dem Ort des tatsächlichen Auftretens des Beginns der Test-Kommunikationsverbindung und dem ersten Messpunkt der Prüfeinrichtung und der systematische Messfehler zwischen dem Ort des tatsächlichen Erzeugens des ersten Zeittaktimpulses und dem zweiten Messpunkt der Prüfeinrichtung ermittelt. Danach wird der zeitliche Abstand zwischen dem erkannten Auftreten des ersten vorbestimmten Ereignisses und dem Empfang des ersten Zeittaktimpulses gemessen und um die systematischen Messfehler korrigiert. Ferner wird geprüft, ob der korrigierte zeitliche Abstand innerhalb des ersten vorbestimmten Zeitbereichs liegt.

Zweckmäßigerweise werden die Zeitintervalle aufeinanderfolgender Zeittaktimpulse durch folgende Schritte gemessen:
Der erste, an der rufenden, analogen Endeinrichtung ankommende Zeittaktimpuls startet eine erste Zeitmessung, jeder folgende, an der rufenden, analogen Endeinrichtung ankommende Zeittaktimpuls stoppt jeweils die Zeitmessung, die durch den unmittelbar vorangegangenen Zeittaktimpuls gestartet worden ist, und startet eine weitere Zeitmessung. Eine i-te Zeitmessung wird durch den letzten Zeittaktimpuls der Test-Kommunikationsverbindung gestartet. Wird die i-te Zeitmessung nicht durch einen weiteren Zeittaktimpuls gestoppt, so signalisiert dies das Ende der Verbindungspreisberechnung. In diesem Fall wird der Wert der i-ten Zeitmessung verworfen. Beispielsweise wird die i-te Zeitmessung dann nach Ablauf einer vorbestimmten Zeit gestoppt.

Jeder begonnenen Zeitmessung zur Ermittlung des zeitlichen Abstandes zweier aufeinanderfolgenden Zeittaktimpulse kann eine fortlaufende Nummer zugeordnet werden.

An dieser Stelle sei erwähnt, dass die Zeitmessungen als Software- oder Hardwareimplementierung ausgeführt werden können. Bei einer Softwareimplementierung wird die Dauer jedes auftreten Zeitintervalls zwischen zwei Zeittaktimpulsen gemessen und in einer Speichereinrichtung abgelegt. Die gespeicherten Werte werden dann mit dem vorbestimmten Zeitintervall verglichen. Bei einer Hardwareimplemetierung genügen beispielsweise zwei Zeitmesser, die jeweils nach dem Messen der Dauer eines Zeitintervalls auf Null zurückgesetzt werden, wobei der Messwert des jeweiligen Zeitmessers zuvor in eine Speichereinrichtung geschrieben wird.

Prüfverfahren, die bei der Validierung der Berechnung von Verbindungspreisen angewandt werden, müssen in der Lage sein, zu prüfen, ob Zeittaktimpulse, die nach dem Verbindungsende erzeugt worden sind, noch auftreten dürfen.

Dazu kann der zeitliche Abstand zwischen dem Ende der Test-Kommunikationsverbindung und einem ersten nach dem Ende der Test-Kommunikationsverbindung empfangenen Zeittaktimpuls durch folgende Schritte ermittelt werden:
Eine Zeitmessung wird gestartet, wenn ein zweites vorbestimmte Ereignis (disconnect; Schleifenunterbrechung), welches dem messbaren Ende der Test-Kommunikationsverbindung entspricht, an dem ersten oder zweiten vorbestimmten Messpunkt der Prüfeinrichtung auftritt. Gleichzeitig wird die Nummer der gerade aktiven Zeitmessung des zeitlichen Abstands zweier aufeinanderfolgender Zeittaktimpulse erfasst.
Die durch das zweite vorbestimmte Ereignis gestartete Zeitmessung wird gestoppt, wenn an dem zweiten vorbestimmten Messpunkt der Prüfeinrichtung der erste Zeittaktimpuls nach dem Ende der Test-Kommunikationsverbindung empfangen wird. Der Wert dieser Zeitmessung wird mit dem zweiten vorbestimmten Zeitbereich verglichen, wenn keine weiteren Zeittaktimpulse innerhalb einer vorbestimmten Zeitspanne mehr empfangen werden.

Angemerkt sei, dass, wenn nach dem Ende der Test-Kommunikationsverbindung keine Zeittaktimpulse empfangen werden, die durch das zweite vorbestimmte Ereignis gestartete Zeitmessung, beispielsweise nach Ablauf einer vorbestimmten Zeit, gestoppt wird. In diesem Fall wird der Wert der Zeitmessung auf "0" gesetzt.

Grundsätzlich dürfen die Werte der Zeitmessungen erst ausgewertet werden, wenn die Messung der Zeittaktintervalle aufeinanderfolgender Zeittaktimpulse abgeschlossen ist. So ist es möglich, dass nicht nur ein Zeittaktimpuls sondern mehrere Zeittaktimpulse nach dem Ende der Test-Kommunikationsverbindung auftreten. Die Prüfung, ob diese Zeittaktimpulse noch auftreten durften, wird wie folgt durchgeführt:

Der Wert der Zeitmessung für den zeitlichen Abstand zwischen dem Ende der Test-Kommunikatinsverbindung und dem ersten nach dem Ende der Test-Kommunikationsverbindung empfangenen Zeittaktimpuls und die Werte aller Zeitmessungen für Zeittaktintervalle aufeinanderfolgender Zeittaktimpulse, deren Nummern größer sind als die Nummer der Zeitmessung des zeitlichen Abstandes zweier aufeinanderfolgender Zeittaktimpulse, die bei Verbindungsende aktiv war, werden addiert und mit dem zweiten vorbestimmten Zeitbereich verglichen.

Zusätzlich kann die Anzahl der Zeitmessungen, deren Nummern größer sind als die Nummer der Zeitmessung des zeitlichen Abstandes zweier aufeinanderfolgender Zeittaktimpulse, die bei Verbindungsende aktiv war, bestimmt werden. Aus dieser Anzahl kann ermittelt werden, ob die Anzahl an Zeittaktimpulsen, die nach dem Ende der Test-Kommunikationsverbindung aufgetreten sind, kleiner, größer oder gleich der maximal zulässigen Anzahl y an Zeittaktimpulsen ist.

Die Genauigkeit des Prüfverfahrens kann verbessert werden, indem der zeitliche Abstand des tatsächlichen Auftretens des Endes der Test-Kommunikationsverbindung und des tatsächlichen Erzeugens von Zeittaktimpulsen präziser berechnet werden kann.

Deshalb wird der systematische Messfehler zwischen dem Ort des tatsächlichen Auftretens des Endes der Test-Kommunikationsverbindung und dem ersten und/oder zweiten Messpunkt der Prüfeinrichtung sowie der systematische Messfehler zwischen dem Ort des tatsächlichen Erzeugens von Zeittaktimpulsen und dem zweiten Messpunkt der Prüfeinrichtung ermittelt. Der zeitliche Abstand zwischen dem Auftreten des zweiten vorbestimmten Ereignisses (disconnect; Schleifenunterbrechung) und dem Empfang eines anschließend auftretenden Zeittaktimpulses wird gemessen und um die systematischen Messfehler korrigiert.

Auf diese Weise wird berücksichtigt, dass die Messpunkte entfernt vom Netzknoten angeordnet sind und somit das Auftreten des tatsächlichen Ereignisses "Verbindungsende", welches an einer Schnittstelle des Netzknotens eintreten kann, und das Erkennen des Ereignisses "Verbindungsende" zeitlich auseinander fallen . Ebenso fallen der Empfang des letzten Zeittaktimpulses und das tatsächliche Erzeugen des letzten Zeittaktimpulses im Netzknoten zeitlich auseinander.

Um die systematischen Messfehler klein halten zu können, wird der erste Messpunkt durch die gerufene Endeinrichtung definiert, der zweite Messpunkt durch die rufende, analoge Endeinrichtung definiert, wobei an beiden Endeinrichtungen die Test-Kommunikationsverbindung auch beendet werden kann.

Es sei an dieser Stelle noch einmal betont, dass ein zweckmäßiger Ansatz der Erfindung darin besteht, den tatsächlichen, nicht messbaren Zeitpunkt des Beginns und Endes einer Test-Kommunikationsverbindung sowie den tatsächlichen, nicht messbaren Zeitpunkt des Erzeugens eines Zeittaktimpulses möglichst präzise zu berechnen.

Das oben genannte Problem wird ferner durch die Merkmale des Anspruchs 10 gelöst.

Danach ist eine Prüfvorrichtung zum Anschalten an wenigstens einen zu prüfenden Netzknoten, welcher Zeittaktimpulse aussenden kann, vorgesehen. Die Prüfvorrichtung weist folgende Merkmale auf:
Einen Rufsimulator zum Simulieren wenigstens einer rufenden, analogen Endeinrichtung und zum Simulieren wenigstens einer weiteren Endeinrichtung, die als gerufene Endeinrichtung betrieben werden kann,
eine erste Detektoreinrichtung zum Erkennen von Zeittaktimpulsen,
eine zweite Detektoreinrichtung zum Erkennen eines ersten vorbestimmten Ereignisses (connect, Schleifenschluss),
welches dem messbaren Beginn einer Test-Kommunikationsverbindung entspricht,
wobei die erste und/oder zweite Detektoreinrichtung zum Erkennen eines zweiten vorbestimmten Ereignisses (disconnect; Schleifenunterbrechung), welches dem messbaren Ende einer Test-Kommunikationsverbindung entspricht, ausgebildet ist. Ferner ist eine erste Zeitmesseinrichtung zum Messen von Zeittaktintervallen von jeweils zwei aufeinanderfolgenden Zeittaktimpulsen,
eine zweite Zeitmesseinrichtung zum Messen des zeitlichen Abstandes zwischen dem Auftreten des ersten vorbestimmten Ereignisses und dem Empfang des ersten Zeittaktimpulses einer aufgebauten Test-Kommunikationsverbindung,
eine dritte Zeitmesseinrichtung zum Messen des zeitlichen Abstandes zwischen dem Auftreten des zweiten vorbestimmten Ereignisses und dem Empfang wenigstens eines Zeittaktimpulses nach dem gemessenen Ende der Test-Kommunikationsverbindung, und eine Auswerteeinrichtung vorgesehen, die die gemessenen Zeitspannen der jeweiligen Zeitmesseinrichtungen mit entsprechenden vorbestimmten Zeitbereichen vergleichen kann. Ferner kann die Auswerteeinrichtung prüfen, ob die Anzahl der nach dem Ende der Test-Kommunikationsverbindung aufgetretenen Zeittaktimpulse kleiner, größer oder gleich einer vorbestimmten maximalen Anzahl y an Zeittaktimpulsen ist.

Um die Messgenauigkeit der Prüfvorrichtung verbessern zu können ist ferner eine Speichereinrichtung vorgesehen, in der der systematische Messfehler zwischen dem Ort des tatsächlichen Beginns einer Test-Kommunikationsverbindung und der zweiten Detektoreinrichtung gespeichert ist, der systematische Messfehler zwischen dem Ort des tatsächlichen Endes einer Test-Kommunikationsverbindung und der ersten oder zweiten Detektoreinrichtung gespeichert ist, und der systematische Messfehler zwischen dem Ort des tatsächlichen Erzeugens von Zeittaktimpulsen und der ersten Detektoreinrichtung der Prüfeinrichtung gespeichert ist.
Eine mit der Speichereinrichtung verbundene Korrektureinrichtung dient zum Korrigieren der von der ersten, zweiten und dritten Zeitmesseinrichtung gemessenen Werte um den jeweiligen systematischen Messfehler.

Um prüfen zu können, ob nach dem Ende der Test-Kommunikationsverbindung empfangene Zeittaktimpulse auftreten dürfen, ist eine Einrichtung, vorzugsweise die erste Zeitmesseinrichtung, zum fortlaufenden Numerieren aufeinanderfolgender Zeittaktintervalle ausgebildet. Ferner kann die dritte Zeitmesseinrichtung unter Ansprechen auf die den Zeittaktintervallen zugeordneten Nummern erkennen, ob nach dem Erkennen des zweiten vorbestimmten Ereignisses (disconnect, Schleifenunterbrechung) ein Zeittaktintervall in der ersten Zeitmesseinrichtung gemessen worden ist. Beispielsweise die dritte Zeitmesseinrichtung oder die Auswerteeinrichtung kann den Wert für den zeitlichen Abstand zwischen dem Ende der Test-Kommunikatinsverbindung und dem ersten nach dem Ende der Test-Kommunikationsverbindung empfangenen Zeittaktimpuls und die Werte aller gemessenen Zeittaktintervalle, deren Nummern jeweils größer sind als die Nummer des Zeittaktintervalls, das beim Auftreten des zweiten vorbestimmten Ereignisses (disconnect; Schleifenunterbrechung) an der ersten oder zweiten Detektoreinrichtung der Prüfeinrichtung aktuell gemessen worden ist, addieren.

Um die systematischen Messfehler möglichst klein zu halten, kann die erste Detektoreinrichtung der rufenden analogen Endeinrichtung zugeordnet sein, wobei die zweite Detektoreinrichtung der gerufenen Endeinrichtung zugeordnet sein kann.

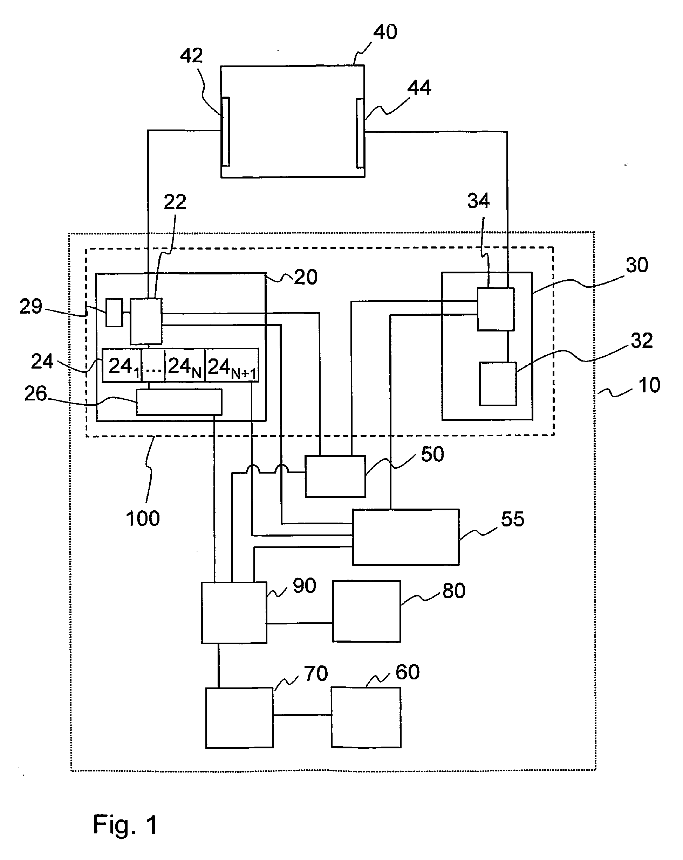

Die Erfindung wird nachfolgend anhand eines Ausführungsbeispiels in Verbindung mit der beiliegenden Zeichnung näher erläutert.

Die Figur zeigt eine beispielhafte Prüfvorrichtung 10, die wenigstens einen Rufsimulator 100 enthält, der eine analoge Endeinrichtung 20 als rufende Endeinrichtung und eine Endeinrichtung 30 als gerufene Endeinrichtung simulieren kann. Die analoge Endeinrichtung 20 ist über eine Schnittstelle 42 mit einem zu prüfenden, vermittelnden Netzknoten 40 verbunden. Die Endeinrichtung 30, welche im vorliegenden Beispiel eine digitale Endeinrichtung ist, ist über eine Schnittstelle 44 mit dem vermittelnden Netzknoten 40 verbunden. Denkbar ist auch eine Testverbindung, bei der die Endeinrichtung 30 an einem anderen vermittelnden Netzknoten angeschlossen ist.

Die analoge Endeinrichtung 20 weist eine Detektoreinrichtung 22 auf, die unter anderem vom Netzknoten 40 erzeugte Zeittaktimpulse erkennen kann. Ferner weist die analoge Endeinrichtung 20 eine hardware- oder softwaremäßig implementierte Zeitmesseinrichtung 24 auf, die in der Lage ist, Zeitintervalle zwischen jeweils zwei aufeinanderfolgenden Zeittaktimpulsen zu messen. Die schematisch dargestellte Zeitmesseinrichtung 24 weist zum Beispiel N+1 Zeitmesser 24₁ bis 24_{N+1} auf, mit denen N+1 Zeittaktintervalle gemessen werden können. Den gemessenen Zeitintervallen wird jeweils eine fortlaufende Nummer zwischen 1 und N+1 zugeordnet, deren Bedeutung weiter unten beschrieben wird. Die Zeitintervalle können zusammen mit der dazugehörenden Nummer in einem Speicher 26 abgelegt werden.

Die analoge Endeinrichtung 20 kann ferner einen Generator 29 aufweisen, der eine Schleifenunterbrechung erzeugt, wenn eine Testverbindung an der analogen Endeinrichtung 20 beendet wird.

Die Endeinrichtung 30 weist einen Generator 32 zum Erzeugen eines Ereignisses auf, welches den Verbindungsanfang und möglicherweise das Verbindungsende einer Testverbindung signalisiert. Bei einer digitalen Endeinrichtung wird als Ereignis die Protokollnachricht "connect" bzw. "disconnect" erzeugt, während bei einer analog ausgebildeten Endeinrichtung 30 als Ereignis ein Schleifenschluss bzw. eine Schleifenunterbrechung erzeugt wird. Diese Ereignisse werden von einem Detektor 34 erkannt.

Die Prüfvorrichtung 10 weist eine weitere Zeitmesseinrichtung 50 auf, die beispielsweise mit den Detektoren 22 und 34 verbunden ist. Mit der Zeitmesseinrichtung 50 kann der zeitliche Abstand zwischen dem am Detektor 34 erkannten Beginn einer Testverbindung und dem am Detektor 22 erkannten ersten Zeittaktimpuls gemessen werden.

Ferner ist eine Zeitmesseinrichtung 55 vorgesehen, die den zeitlichen Abstand zwischen dem am Detektor 22 oder 34 erkannten Ende einer Testverbindung und einen am Detektor 22 erkannten Zeittaktimpuls, der nach Beendigung der Testverbindung im Netzknoten 40 erzeugt wird, messen kann. Die Zeitmesseinrichtung 55 ist hierzu mit den Detektoren 22 und 34 verbunden. Ferner ist die Zeitmesseinrichtung 55 mit der Zeitmesseinrichtung 24 verbunden, um die Nummern der gemessenen Zeittaktintervalle und gegebenenfalls die zeitliche Länge bestimmter Zeittaktintervalle zu erhalten.

In einer Speichereinrichtung 80 sind zeitliche Korrekturwerte abgelegt, die den systematischen Messfehlern zwischen den Schnittstellen 42 und 44 des Netzknoten 40 als Orte der tatsächlichen Ereignisse - Erzeugung von Zeittaktimpulsen, Erkennen eines Verbindungsendes und -anfangs - und den Detektoren 22 und 34 als Ort der gemessenen Ereignisse entsprechen.

Eine Korrektureinrichtung 90 ist mit der Speichereinrichtung 26, den Zeitmesseinrichtungen 50 und 55 sowie der Speichereinrichtung 80 verbunden. Da die in der Zeitmesseinrichtung 24 gemessenen und in der Speichereinrichtung 26 gespeicherten Zeittaktintervalle nicht korrigiert werden müssen, werden diese zusammen mit der dazugehörenden Nummer einfach nur durch die Korrektureinrichtung 90 zu einer Auswerteeinrichtung 70 geschleift. Die von den Zeitmesseinrichtungen 50 und 55 kommenden Werte werden hingegen in der Korrektureinrichtung 90 um die in der Speichereinrichtung 80 gespeicherten systematischen Messfehler korrigiert und dann zur Auswerteeinrichtung 70 übertragen.

Die Auswerteeinrichtung 70 ist ferner mit einer Speichereinrichtung 60 verbunden, in der Referenzwerte gespeichert sind. Die Referenzwerte entsprechen insbesondere der vorbestimmten Länge eines Zeitintervalls, welche von der ausgewählten Testprozedur abhängen kann, einem vorbestimmten zeitlichen Abstand, der zwischen dem tatsächlichen Verbindungsbeginn und dem Erzeugen des ersten Zeittaktimpulses liegen darf, einem weiteren vorbestimmten zeitlichen Abstand, der den maximalen zeitlichen Abstand definiert, welcher zwischen dem tatsächlichen Ende der Testverbindung und dem letzten danach erzeugten Zeittaktimpuls liegen darf, sowie einer Anzahl y an Zeittaktimpulsen, die maximal nach dem Ende der Test-Kommunikatinsverbindung erzeugt werden dürfen. Zusätzlich kann noch ein Referenzwert für eine Anzahl x an Zeittaktimpulsen, die mindestens nach dem Ende der Test-Kommunikatinsverbindung erzeugt werden dürfen, abgespeichert sein.

Nachfolgend wird die Funktionsweise der in der Figur dargestellten Prüfvorrichtung 10 näher erläutert.

Es sei nunmehr angenommen, dass eine Testverbindung von der analogen Endeinrichtung 20 über den Vermittlungsknoten 40 zur Endeinrichtung 30 hergestellt werden soll. Die analoge Endeinrichtung 20 überträgt unter anderem die Rufnummer der Endeinrichtung 30 zum Netzknoten, der daraufhin eine Rufsignalisierung zur Endeinrichtung 30 übermittelt. Aus der empfangenen Rufnummer ermittelt' der Netzknoten 40 die vertragliche Länge der Zeittaktintervalle, die für die Berechnung der Verbindungskosten relevant sind. Diese Länge dieses Zeittaktintervalls ist für die ausgewählte Testverbindung als Referenzwert in dem Speicher 60 abgelegt.

Unter Ansprechen auf die Rufsignalisierung wird beispielsweise in der Endeinrichtung 30 das Abheben des Telefonhörers simuliert. Daraufhin wird die im Generator 32 erzeugte Protokollnachricht "connect" zur Schnittstelle 44 des Netzknotens 40 übermittelt. Im vorliegenden Beispiel wird die Protokollnachricht "connect" zunächst in der Detektoreinichtung 34 erkannt, die anschließend eine Zeitmessung mittels der Zeitmesseinrichtung 50 startet.

Unter Ansprechen auf den Empfang der Protokollnachricht "connect" an der Schnittstelle 44 sendet der Netzknoten 40 einen ersten Zeittaktimpuls, den sogenannten Beginnimpuls zur analogen, rufenden Endeinichtung 20. Der Detektor 22 erkennt den empfangenen Beginnimpuls und stoppt den Zeitmesser 50. Demzufolge wird auch die Messung des zeitlichen Abstands zwischen dem Erzeugen der Protokollnachricht "connect" und dem Empfang des Beginnimpulses an der analogen Endeinrichtung 20 beendet.

Dieser Beginnimpuls (erster Zählimpuls) darf höchstens um eine erste vorbestimmte Zeitspanne vom tatsächlichen Verbindungsbeginn abweichen.

Der mittels des Zeitmessers 50 gemessene zeitliche Abstand unterliegt einem systematischen Messfehler. Der systematische Messfehler rührt daher, dass die Messpunkte, das sind Orte in der analogen Endeinrichtung 20 und in der Endeinrichtung 30, nicht die Orte der tatsächlichen Ereignisse sind. Denn der Ort, an dem der Beginnimpuls tatsächlich ausgesendet und der Verbindungsbeginn (Empfang der Protokollnachricht "connect") tatsächlich auftritt, sind im vorliegenden Beispiel die Schnittstellen 42 und 44 des Netzknotens 40. Die Zeitabweichung, die durch das Auseinanderfallen der Orte, an denen die Ereignisse tatsächlich auftreten, und der Messpunkte, an denen diese Ereignisse gemessenen werden, verursacht wird, stellen den systematischen Messfehler dar, der vor Testbeginn ermittelt und in dem Speicher 80 abgelegt wird. Der systematische Messfehler entspricht im vorliegenden Beispiel in etwa der Signallaufzeit der Protokollnachricht "connect" von der Endeinrichtung 30 zum Netzknoten 40 und der Signallaufzeit des Beginnimpulses vom Netzknoten 40 zur analogen Endeinrichtung 20. Die Zeitmesseinrichtung 50 liefert deshalb den gemessenen zeitlichen Abstand zur Korrektureinrichtung 90, in der der zeitliche Abstand um den systematischen Messfehler korrigiert wird.

Der korrigierte zeitliche Abstand wird in der Auswerteeinrichtung 70 mit dem entsprechenden Referenzwert aus dem Speicher 60 verglichen, um feststellen zu können, ob die Zeit zwischen den beiden Ereignissen maximal der ersten vorbestimmten Zeitspanne ist.

Während der bestehenden Verbindung sendet der Netzknoten 40 fortlaufend Zeittaktimpulse zur analogen Endeinrichtung 20, die vom Detektor 22 erkannt werden.

Der Abstand von jeweils zwei aufeinanderfolgenden Zeittaktimpulsen darf die zulässige Toleranz nicht überschreiten. Die Einhaltung dieser Toleranz muss deshalb bis zum Ende der Testverbindung und gegebenenfalls darüber hinaus permanent überwacht werden.

Zunächst startet der Beginnimpuls den ersten Zeitmesser 24₁ der Zeitmesseinrichtung 24, der nächste Zeittaktimpuls stoppt den ersten Zeitmesser 24₁ und startet den zweiten Zeitmesser usw., bis der letzte, während der bestehenden Testverbindung empfangene Zeittaktimpuls den Zeitmesser 24_{N-1} stoppt und den Zeitmesser 24_{N} startet. Gleichzeitig wird jedem gemessenen Zeittaktintervall eine fortlaufende Nummer zugeordnet. Die Nummern und die dazugehörenden Zeittaktintervalle werden in der Speichereinrichtung 26 gespeichert. Ein dem gemessenen Verbindungsende folgender Zeittaktimpuls stoppt den Zeitmesser 24_{N} und startet den Zeitmesser 24_{N+1}. Der Zeitmesser 24_{N+1} kann gestoppt werden, wenn nach dem Ende der Testverbindung innerhalb einer vorbestimmten Zeitspanne, die beispielsweise die Länge von zwei Zeittaktintervallen hat, kein weiterer Zeittaktimpuls empfangen wird. Der Inhalt des Zeitmessers 24_{N+1} wird dann verworfen.

Die im Speicher 26 gespeicherten Zeittaktintervalle werden ohne Korrektur zusammen mit den dazugehörenden Nummern über die Korrektureinrichtung 90 zur Auswerteeinrichtung 70 übertragen. Eine Korrektur der Länge der Zeittaktintervalle ist also nicht erforderlich. Dies ist darin begründet, dass der systematische Messfehler bei dieser Prüfvorrichtung einerseits aus der Laufzeit der Zeittaktimpulse vom Netzknoten 40 zur analogen Endeinrichtung 20, und andererseits aus der Verarbeitungsgeschwindigkeit der Prüfvorrichtung 10 resultiert. Beides führt dazu, dass in der Prüfvorrichtung 10 das Ereignis "Netzknoten 40 sendet Zeittaktimpuls" nur mit einer Zeitverzögerung erkannt wird. Diese Verzögerung kann als konstant betrachtet werden. Somit ergibt sich bei der Messung der Intervalllänge ein systematischer Messfehler von ±0 ms.

Die Auswerteeinrichtung 70 vergleicht die gemessenen Zeittaktintervalle mit dem im Speicher 60 abgelegten Referenzzeitintervall und prüft, ob die zulässige Toleranz erfüllt ist.

Nunmehr sei angenommen, dass an der Endeinrichtung 30 die Testverbindung beendet wird. In diesem Fall wird in der Endeinrichtung 30 das Ereignis "Telefonhörer aufgelegt" simuliert. Daraufhin überträgt der Generator 32 die Protokollnachricht "disconnect" zur Schnittstelle 44 des Netzknotens 40. Im vorliegenden Beispiel wird die Protokollnachricht "disconnect" vom Detektor 34 erkannt, der daraufhin die Zeitmesseinrichtung 55 startet. Gleichzeitig ermittelt die Prüfvorrichtung 10 die Nummer N des gerade aktiven Zeitmessers 24_{N}.

Nachfolgend werden zwei Fälle betrachtet. Im ersten Fall wird nur ein Zeittaktimpuls in der analogen Endeinrichtung 20 empfangen, nachdem die Protokollnachricht "disconnect" vom Generator 32 erzeugt worden ist. Im zweiten Fall werden noch zwei Zeittaktimpulse in der analogen Endeinrichtung 20 empfangen, nachdem die Protokollnachricht "disconnect" vom Generator 32 erzeugt worden ist. Falls mehr als zwei Zeittaktimpulse in der analogen Endeinrichtung 20 empfangen werden, entspricht die Funktionsweise der Prüfvorrichtung dem zweiten Fall.

Wir betrachten zunächst den ersten Fall.

Es sei angenommen, dass noch ein Zeittaktimpuls vom Detektor 22 erkannt wird, nachdem die Protokollnachricht "disconnect" vom Generator 32 erzeugt worden ist. Unter Ansprechen auf den Empfang dieses Zeittaktimpulses werden die Zeitmesseinrichtung 55 und der Zeitmesser 24_{N} gestoppt, während der Zeitmesser 24_{N+1} gestartet wird.

Der Wert der Zeitmesseinrichtung 55 entspricht dem zeitlichen Abstand zwischen dem Erzeugen der Protokollnachricht "disconnect" und dem Empfang des einen Zeittaktimpulses.

Allerdings muss dieser gemessene zeitliche Abstand in der Korrektureinrichtung 90 noch um den systematischen Messfehler, der im Speicher 80 abgelegt ist, korrigiert werden.

Denn wie bereits oben erwähnt, sind die Messpunkte in der analogen Endeinrichtung 20 und in der Endeinrichtung 30 nicht die Orte der tatsächlichen Ereignisse "Verbindungsende" und "Erzeugen eines Zeittaktimpulses". Denn der Ort, an dem der Zeittaktimpuls tatsächlich ausgesendet und das Verbindungsende (Empfang der Protokollnachricht "disconnect") tatsächlich auftritt, sind im vorliegenden Beispiel die Schnittstelle 42 bzw. 44 des Netzknotens 40. Die Zeitabweichung, die durch das Auseinanderfallen der Orte, an denen die Ereignisse tatsächlich auftreten, und der Messpunkte, an denen diese Ereignisse gemessenen werden, verursacht wird, stellt einen systematischen Messfehler dar, der in dem Speicher 80 abgelegt ist. Der systematische Messfehler entspricht im vorliegenden Beispiel in etwa der Signallaufzeit der Protokollnachricht "disconnect" von der Endeinrichtung 30 zum Netzknoten 40 und der Signallaufzeit eines Zeittaktimpulses vom Netzknoten 40 zur analogen Endeinrichtung 20.

Der korrigierte Wert wird zusammen mit der Nummer N an die Auswerteeinrichtung 70 übertragen und dort mit dem zweiten vorbestimmten Zeitwert verglichen, um feststellen zu können, ob der korrigierte Wert kleiner oder gleich dem zweiten vorbestimmten Zeitwert ist. Darüber hinaus kann die Auswerteeinrichtung 70 noch prüfen, ob die Anzahl der nach dem Ende der Test-Kommunikationsverbindung aufgetretenen Zeittaktimpulse in dem Intervall zwischen x und y liegt.

Es wird nunmehr der zweite Fall betrachtet, bei dem genau zwei Zeittaktimpulse in der analogen Endeinrichtung 20 empfangen werden, nachdem die Protokollnachricht "disconnect" vom Generator 32 erzeugt worden ist.

Es sei angenommen, dass ein erster Zeittaktimpuls vom Detektor 22 erkannt wird, nachdem die Protokollnachricht "disconnect" vom Generator 32 erzeugt worden ist. Unter Ansprechen auf den Empfang dieses ersten Zeittaktimpulses werden die Zeitmesseinrichtung 55 und der Zeitmesser 24_{N} gestoppt, während der Zeitmesser 24_{N+1} gestartet wird. Zusätzlich wird dem vom Zeitmesser 24_{N} gemessenen Zeittaktintervall die laufende Nummer N zugeordnet.

Ein zweiter Zeittaktimpuls wird vom Detektor 22 erkannt. Unter Ansprechen auf den zweiten Zeittaktimpuls wird der Zeitmesser 24_{N+1} gestoppt und dem vom Zeitmesser 24_{N+1} gemessenen Zeittaktintervall die laufende Nummer N+1 zugeordnet.

Die Zeitmesseinrichtung 55 kann anhand der laufenden Nummer des Zeitmessers 24_{N+1} erkennen, dass, nachdem die Protokollnachricht "disconnect" vom Generator 32 erzeugt worden ist, ein vollständiges Zeittaktintervall N+1 gemessen worden ist, und addiert diesen Wert zu dem Wert der Zeitmesseinrichtung 55, der dem zeitlichen Abstand zwischen dem Erzeugen der Protokollnachricht "disconnect" und dem Empfang des ersten Zeittaktimpulses entspricht.

Der in der Zeitmesseinrichtung 55 ermittelte zeitliche Abstand wird in der Korrektureinrichtung 90 noch um den systematischen Messfehler, der in der Speichereinrichtung 80 abgelegt ist, korrigiert und zusammen mit der Nummer N an die Auswerteeinrichtung 70 übertragen.

Die Auswerteeinrichtung 70 prüft, ob der errechnete Wert kleiner oder gleich der zweiten vorbestimmten Zeitspanne ist.

Darüber hinaus kann die Auswerteeinrichtung 70 noch prüfen, ob die Anzahl der nach dem Ende der Test-Kommunikationsverbindung aufgetretenen Zeittaktimpulse in dem Intervall zwischen x und y liegt.

Wie gesehen, muss beim Start des Zeitmessers 55 die Nummer des aktuell laufenden Zeitmessers der Zeitmesseinrichtung 24 von der Prüfvorrichtung 10 registriert werden, um die beschriebene Auswertung der Messergebnisse durchführen zu können.

Es sei angemerkt, dass der Ort der Messpunkte vorzugsweise so gewählt wird, dass der dazugehörende systematische Messfehler möglichst gering wird. Für das oben genannte Beispiel liegt somit der Messpunkt, in dem das Ereignis "Verbindungsbeginn" erkannt wird, in der gerufenen Endeinrichtung 30. Der Messpunkt, in dem das Ereignis "Verbindungsende" erkannt wird, liegt ebenfalls in der Endeinrichtung 30, an welcher die Verbindung beendet wurde.

### Bezugszeichenliste

- 10: Prüfvorrichtung
- 20: rufende analoge Endeinrichtung
- 22: Detektor
- 24: Zeitmesseinrichtung zum Messen von Zeittaktintervallen aufeinanderfolgender Zeittaktimpulse
- 24₁- 24_{N+1}: Zeitmesser
- 26: Speicher, in dem die gemessenen Zeittaktintervalle zusammen mit ihrer Nummer abgelegt werden
- 29: Generator
- 30: gerufene Endeinrichtung
- 32: Generator
- 34: Detektor
- 40: vermittelnder Netzknoten
- 42: Schnittstelle
- 44: Schnittstelle
- 50: Zeitmesser zum Messen der Zeitspanne zwischen dem Beginn einer Test-Kommunikationsverbindung und dem ersten Zeittaktimpuls
- 55: Zeitmesseinrichtung
- 60: Speicher, in dem vorbestimmte Referenzwerte abgelegt werden
- 70: Auswerteeinrichtung
- 80: Speicher, in dem Korrekturwerte abgelegt sind, die den systematischen Messfehlern entsprechen
- 90: Korrektureinrichtung
- 100: Rufsimulator

## Patentansprüche

1. Verfahren zum Überprüfen der Entgeltabrechnung für eine Kommunikationsverbindung nach Zeittaktintervallen, wobei eine Prüfeinrichtung (10), welche wenigstens eine rufende, analoge Endeinrichtung (20) und wenigstens eine gerufene Endeinrichtung (30)simulieren kann, an wenigsten einem Netzknoten (40) angeschlossen ist, der Zeittaktimpulse erzeugen kann, mit folgenden Verfahrensschritten:
wenigstens eine vorbestimmte Test-Kommunikationsverbindung wird über wenigstens den einen Netzknoten (40) auf- und wieder abgebaut;
der zeitliche Abstand zwischen dem Beginn der Test-Kommunikationsverbindung und dem Erzeugen eines ersten Zeittaktimpulses wird ermittelt und es wird geprüft, ob der ermittelte zeitliche Abstand innerhalb eines ersten vorbestimmten Zeitbereichs liegt;
während der bestehenden Test-Kommunikationsverbindung werden Zeittaktintervalle aufeinanderfolgender Zeittaktimpulse gemessen und mit einem vorbestimmten Zeitintervall verglichen; und
es wird geprüft, ob nach dem Ende der Test-Kommunikationsverbindung wenigstens ein weiterer Zeittaktimpuls empfangen worden ist,
wenn ja, wird der zeitliche Abstand zwischen dem Ende der Test-Kommunikationsverbindung und dem wenigstens einen Zeittaktimpuls ermittelt und es wird geprüft, ob der ermittelte zeitliche Abstand innerhalb eines zweiten vorbestimmten Zeitbereichs liegt.

2. Verfahren nach Anspruch 1,
**dadurch gekennzeichnet, dass**
weiter geprüft wird, ob die Anzahl der nach dem Ende der Test-Kommunikationsverbindung aufgetretenen Zeittaktimpulse kleiner, größer oder gleich einer vorbestimmten maximalen Anzahl y an Zeittaktimpulsen ist.

3. Verfahren nach Anspruch 1 oder 2,
**dadurch gekennzeichnet, dass**
der zeitliche Abstand zwischen dem Beginn der Test-Kommunikationsverbindung und dem Erzeugen des ersten Zeittaktimpulses durch folgende Schritte ermittelt wird:
das Auftreten eines ersten vorbestimmten Ereignisses, insbesondere eines CONNECT SIGNALS oder eines Schleifenschlusses, welches dem messbaren Beginn der Test-Kommunikationsverbindung entspricht, wird an einem ersten vorbestimmten Messpunkt (34) der Prüfeinrichtung (10) erkannt;
der Empfang des ersten, vom Netzknoten (40) erzeugten Zeittaktimpulses der Test-Kommunikationsverbindung wird an einem zweiten vorbestimmten Messpunkt (22) der Prüfeinrichtung erkannt; und
eine Zeitmessung (50) wird in Abhängigkeit von dem erkannten Auftreten des ersten vorbestimmten Ereignisse, insbesondere eines CONNECT SIGNALS oder eines Schleifenschlusses, und dem Empfang des ersten Zeittaktimpulses gestartet bzw. gestoppt.

4. Verfahren nach Anspruch 3,
**dadurch gekennzeichnet, dass**
der systematische Messfehler zwischen dem Ort (44) des tatsächlichen Auftretens des Beginns der Test-Kommunikationsverbindung und dem ersten Messpunkt (34)
der Prüfeinrichtung (10) ermittelt wird,
der systematische Messfehler zwischen dem Ort (42) des tatsächlichen Erzeugens des ersten Zeittaktimpulses und dem zweiten Messpunkt der Prüfeinrichtung (10) ermittelt wird, dass
der zeitliche Abstand zwischen dem erkannten Auftreten des ersten vorbestimmten Ereignisses und dem Empfang des ersten Zeittaktimpulses gemessen und um die systematischen Messfehler korrigiert wird, und dass geprüft wird, ob der korrigierte zeitliche Abstand innerhalb des ersten vorbestimmten Zeitbereichs liegt.

5. Verfahren nach einem der Ansprüche 1 bis 4,
**dadurch gekennzeichnet, dass**
die Zeitintervalle aufeinanderfolgender Zeittaktimpulse durch folgende Schritte gemessen werden:
der erste, an der rufenden, analogen Endeinrichtung (20) ankommende Zeittaktimpuls startet eine erste Zeitmessung (24₁),
jeder folgende, an der rufenden, analogen Endeinrichtung ankommende Zeittaktimpuls stoppt jeweils die Zeitmessung, die durch den unmittelbar vorangegangenen Zeittaktimpuls gestartet worden ist, und startet eine weitere Zeitmessung;
eine i-te Zeitmessung (24ᵢ) durch den letzten Zeittaktimpuls der Test-Kommunikationsverbindung gestartet wird.

6. Verfahren nach Anspruch 5,
**dadurch gekennzeichnet, dass**
jeder gestarteten Zeitmessung eine fortlaufende Nummer zugeordnet wird.

7. Verfahren nach Anspruch 6,
**dadurch gekennzeichnet, dass**
der zeitliche Abstand zwischen dem Ende der Test-Kommunikationsverbindung und einem ersten nach dem Ende der Test-Kommunikationsverbindung empfangenen Zeittaktimpuls durch folgende Schritte ermittelt wird:
eine Zeitmessung (55) wird gestartet, wenn ein zweites vorbestimmte Ereignis, insbesondere eines DISCONNECT SIGNALS oder einer Schleifenunterbrechung,
welches dem messbaren Ende der Test-Kommunikationsverbindung entspricht, an dem ersten oder zweiten vorbestimmten Messpunkt (34) der Prüfeinrichtung (10) auftritt;
die durch das zweite vorbestimmte Ereignis gestartete Zeitmessung (55) wird gestoppt, wenn an dem zweiten vorbestimmten Messpunkt der Prüfeinrichtung der erste Zeittaktimpuls nach dem Ende der Test-Kommunikationsverbindung empfangen wird; und
der Wert der Zeitmessung (55) wird mit dem zweiten vorbestimmten Zeitbereich verglichen.

8. Verfahren nach Anspruch 7,
**dadurch gekennzeichnet, dass**,
wenn das zweite vorbestimmte Ereignis insbesondere eines DISCONNECT SIGNALS oder einer Schleifenunterbrechung an dem ersten oder zweiten vorbestimmten Messpunkt (34; 22) der Prüfeinrichtung (10) auftritt, die Nummer der gerade aktiven Zeitmessung (24) des Zeittaktintervalls zweier aufeinanderfolgender Zeittaktimpulse erfasst wird; dass
der zeitliche Abstand zwischen dem Ende der Test-Kommunikationsverbindung und weiterer nach dem Ende der Test-Kommunikationsverbindung erkannten Zeittaktimpulsen durch folgende Schritte ermittelt wird:
der Wert der Zeitmessung (55) für den zeitlichen Abstand zwischen dem Ende der Test-Kommunikatinsverbindung und
dem ersten nach dem Ende der Test-Kommunikationsverbindung empfangenen Zeittaktimpuls und
die Werte aller Zeitmessungen (24₁-24ᵢ) für Zeittaktintervalle aufeinanderfolgender Zeittaktimpulse, deren Nummern jeweils größer sind als die Nummer der Zeitmessung, die beim Auftreten des zweiten vorbestimmten Ereignises insbesondere eines DISCONNECT SIGNALS oder einer Schleifenunterbrechung, an dem ersten oder zweiten vorbestimmten Messpunkt (34; 22) der Prüfeinrichtung (10) erfasst worden ist, werden addiert
und mit dem zweiten vorbestimmten Zeitbereich verglichen.

9. Verfahren nach Anspruch 7 oder 8,
**dadurch gekennzeichnet, dass**
der systematische Messfehler zwischen dem Ort (42, 44) des tatsächlichen Auftretens des Endes der Test-Kommunikationsverbindung und dem ersten und/oder zweiten Messpunkt der Prüfeinrichtung (10) ermittelt wird, der systematische Messfehler zwischen dem Ort (42) des tatsächlichen Erzeugens von Zeittaktimpulsen und dem zweiten Messpunkt der Prüfeinrichtung (10) ermittelt wird, dass
der zeitliche Abstand zwischen dem Auftreten des zweiten vorbestimmten Ereignisses, insbesondere eines DISCONNECT SIGNALS oder einer Schleifenunterbrechung
und dem Empfang des ersten, nach dem Ende der Test-Kommunikationsverbindung aufgetretenen Zeittaktimpulses gemessen und um die systematischen Messfehler korrigiert wird.

10. Verfahren nach einem der Ansprüche 3 bis 9
**dadurch gekennzeichnet, dass**
der erste Messpunkt durch die gerufene Endeinrichtung (30) definiert wird,
der zweite Messpunkt durch die rufende, analoge Endeinrichtung (20) definiert wird, wobei
an beiden Endeinrichtungen (20, 30) die Test-Kommunikationsverbindung auch beendet werden kann.

11. Prüfvorrichtung zum Anschalten an wenigstens einen zu prüfenden Netzknoten (40), welcher Zeittaktimpulse aussenden kann, insbesondere zur Durchführung eines Verfahrens nach einem der Ansprüche 1 bis 10, mit einem Rufsimulator (100) zum Simulieren wenigstens einer rufenden, analogen Endeinrichtung (20) und zum Simulieren wenigstens einer weiteren Endeinrichtung (30), die als gerufene Endeinrichtung betrieben werden kann,
einer ersten Detektoreinrichtung (22) zum Erkennen von Zeittaktimpulsen,
einer zweiten Detektoreinrichtung (34) zum Erkennen eines ersten vorbestimmten Ereignisses, insbesondere eines CONNECT SIGNALS oder eines Schleifenschlusses,
welches dem messbaren Beginn einer Test-Kommunikationsverbindung entspricht,
wobei die erste und/oder zweite Detektoreinrichtung (22; 34) zum Erkennen eines zweiten vorbestimmten Ereignisses, insbesondere eines DISCONNECT SIGNALS oder einer Schleifenunterbrechung, welches dem messbaren Ende einer Test-Kommunikationsverbindung entspricht, ausgebildet sind,
einer ersten Zeitmesseinrichtung (24) zum Messen von Zeittaktintervallen von jeweils zwei aufeinanderfolgenden Zeittaktimpulsen,
einer zweiten Zeitmesseinrichtung (50) zum Messen des zeitlichen Abstandes zwischen dem Auftreten des ersten vorbestimmten Ereignisses und dem Empfang des ersten Zeittaktimpulses einer aufgebauten Test-Kommunikationsverbindung,
einer dritten Zeitmesseinrichtung (55) zum Messen des zeitlichen Abstandes zwischen dem Auftreten des zweiten vorbestimmten Ereignisses und dem Empfang wenigstens
eines Zeittaktimpulses nach dem gemessenen Ende der Test-Kommunikationsverbindung,
einer Auswerteeinrichtung (70) zum Vergleichen der gemessenen Zeitspannen der jeweiligen Zeitmesseinrichtungen mit entsprechenden vorbestimmten Zeitbereichen.

12. Prüfvorrichtung nach Anspruch 11,
**dadurch gekennzeichnet,dass**
die Auswerteeinrichtung (70) zum Prüfen, ob die Anzahl der nach dem Ende der Test-Kommunikationsverbindung aufgetretenen Zeittaktimpulse kleiner, größer oder gleich einer vorbestimmten maximalen Anzahl y an Zeittaktimpulsen ist, ausgebildet ist.

13. Prüfvorrichtung nach Anspruch 11 oder 12,
**gekennzeichnet durch**
eine Speichereinrichtung (80), in der der systematische Messfehler zwischen dem Ort (44) des tatsächlichen Beginns einer Test-Kommunikationsverbindung und der zweiten Detektoreinrichtung (34) gespeichert ist,
in der der systematische Messfehler zwischen dem Ort (42, 44) des tatsächlichen Endes einer Test-Kommunikationsverbindung und der ersten oder zweiten Detektoreinrichtung (22; 34) gespeichert ist, und
in der der systematische Messfehler zwischen dem Ort (42) des tatsächlichen Erzeugens von Zeittaktimpulsen und der ersten Detektoreinrichtung (22) der Prüfeinrichtung (10) gespeichert ist,
eine mit der Speichereinrichtung (80) verbundene Korrektureinrichtung (90) zum Korrigieren der von der ersten, zweiten und dritten Zeitmesseinrichtung (24, 50, 55) gemessenen Werte um den jeweiligen systematischen Messfehler, wobei
die Auswerteeinrichtung (70) zum Vergleichen der gemessenen und korrigierten Zeitspannen mit entsprechenden vorbestimmten Zeitbereichen ausgebildet ist.

14. Prüfvorrichtung nach einem der Ansprüche 11 bis 13,
**dadurch gekennzeichnet, dass**
eine Einrichtung zum fortlaufenden Numerieren aufeinanderfolgender Zeittaktintervalle vorgesehen ist, dass
die dritte Zeitmesseinrichtung (55) unter Ansprechen auf die den Zeittaktintervallen zugeordneten Nummern erkennen kann, ob nach dem Erkennen des zweiten vorbestimmten Ereignisses, insbesondere eines DISCONNECT SIGNALS oder einer Schleifenunterbrechung ein Zeittaktintervall in der ersten Zeitmesseinrichtung (24) gemessen worden ist, und dass
die dritte Zeitmesseinrichtung (55) oder die Auswerteeinrichtung (70) den Wert für den zeitlichen Abstand zwischen dem Ende der Test-Kommunikatinsverbindung und dem ersten nach dem Ende der Test-Kommunikationsverbindung empfangenen Zeittaktimpuls und die Werte aller gemessenen Zeittaktintervalle, deren Nummern jeweils größer sind als die Nummer des Zeittaktintervalls, das beim Auftreten des zweiten vorbestimmten Ereignises, insbesondere eines DISCONNECT SIGNALS oder einer Schleifenunterbrechung
an der ersten oder zweiten Detektoreinrichtung (22, 34) der Prüfeinrichtung (10) aktuell gemessen worden ist, addieren kann.

15. Prüfvorrichtung nach einem der Ansprüche 11 bis 14,
**dadurch gekennzeichnet, dass**
die erste Detektoreinrichtung (22) der rufenden analogen Endeinrichtung (20) zugeordnet ist, und dass die zweite Detektoreinrichtung (34) der gerufenen Endeinrichtung (30) zugeordnet ist.

## Claims

1. Method for verification of the billing of charges for a communications connection based on time pulse intervals, wherein a testing device (10), which can simulate at least one calling analog terminal device (20) and at least one called terminal device (30), is connected to at least one network node (40) that can generate time pulses, having the following process steps:
at least one predetermined test communications connection through at least the one network node (40) is set up and torn down again;
the time separation between the start of the test communications connection and the generation of a first time pulse is measured, and it is determined whether the measured time separation lies within a first predetermined time range;
during the existing test communications connection, time pulse intervals of successive time pulses are measured and are compared with a predetermined time interval; and
a determination is made as to whether at least one more time pulse has been received after the end of the test communications connection,
if so, the time separation between the end of the test communications connection and the at least one time pulse is measured, and it is determined whether the measured time separation lies within a second predetermined time range.

2. Method according to claim 1, **characterized in that** it is further determined whether the number of time pulses that have occurred after the end of the test communications connection is less than, greater than, or equal to a predetermined maximum number y of time pulses.

3. Method according to claim 1 or 2, **characterized in that** the time separation between the start of the test communications connection and the generation of the first time pulse is determined through the following steps:
the occurrence of a first predetermined event, in particular a CONNECT SIGNAL or a loop closure, corresponding to the measurable start of the test communications connection, is detected at a first predetermined measurement point (34) of the testing device (10);
the reception of the first time pulse generated by the network node (40) for the test communication connection is detected at a second predetermined measurement point (22) of the testing device; and
a time measurement (50) is started or stopped as a function of the detected occurrence of the first predetermined event, in particular a CONNECT SIGNAL or a loop closure, and the reception of the first time pulse.

4. Method according to claim 3, **characterized in that** the systematic measurement error between the point (44) of the actual occurrence of the beginning of the test communications connection and the first measurement point (34) of the testing device (10) is determined,
the systematic measurement error between the point (42) of the actual generation of the first time pulse and the second measurement point of the testing device (10) is determined,
**in that** the time separation between the detected occurrence of the first predetermined event and the reception of the first time pulse is measured and is corrected for the systematic measurement error,
and **in that** it is determined whether the corrected time separation lies within the first predetermined time range.

5. Method according to any one of claims 1 through 4, **characterized in that** the time intervals of successive time pulses are measured by means of the following steps:
the first time pulse arriving at the calling analog terminal device (20) starts a first time measurement (24₁),
each subsequent time pulse arriving at the calling analog terminal device stops the time measurement that was started by the immediately preceding time pulse and starts another time measurement;
an i-th time measurement (24ᵢ) is started by the last time pulse of the test communications connection.

6. Method according to claim 5, **characterized in that** a sequential number is assigned to each started time measurement.

7. Method according to claim 6, **characterized in that** the time separation between the end of the test communications connection and a first time pulse received after the end of the test communications connection is determined by the following steps:
a time measurement (55) is started when a second predetermined event, in particular a DISCONNECT SIGNAL or a loop interruption, corresponding to the measurable end of the test communications connection, occurs at the first or second predetermined measurement point (34) of the testing device (10);
the time measurement (55) started by the second predetermined event is stopped when the first time pulse is received at the second predetermined measurement point of the testing device following the end of the test communications connection; and
the value of the time measurement (55) is compared with the second predetermined time range.

8. Method according to claim 7, **characterized in that** when the second predetermined event, in particular a DISCONNECT SIGNAL or a loop interruption, occurs at the first or second predetermined measurement point (34; 22) of the testing device (10), the number of the currently active time measurement (24) of the time interval between two successive time pulses is acquired; **in that** the time separation between the end of the test communications connection and additional time pulses detected after the end of the test communications connection is determined through the following steps:
the value of the time measurement (55) for the time separation between the end of the test communications connection and the first time pulse received after the end of the test communications connection, and the values of all time measurements (24₁ - 24ᵢ) for time pulse intervals of successive time pulses whose numbers are greater than the number of the time measurement that has been measured at the first or second measurement point (34; 22) of the testing device (10) during the occurrence of the second predetermined event, in particular a DISCONNECT SIGNAL or a loop interruption, are added and compared to the second predetermined time range.

9. Method according to claim 7 or 8, **characterized in that** the systematic measurement error between the point (42, 44) of the actual occurrence of the end of the test communications connection and the first and/or second measurement point of the testing device (10) is determined, the systematic measurement error between the point (42) of the actual generation of time pulses and the second measurement point of the testing device (10) is determined,
**in that** the time separation between the occurrence of the second predetermined event, in particular a DISCONNECT SIGNAL or a loop interruption, and the reception of the first time pulse occurring after the end of the test communications connection is measured and is corrected for the systematic measurement errors.

10. Method according to any one of claims 3 through 9, **characterized in that** the first measurement point is defined by the called terminal device (30), the second measurement point is defined by the calling analog terminal device (20), wherein the test communications connection can also be terminated at either of the terminal devices (20, 30).

11. Testing device for switching in at least one network node (40) to be tested which can transmit time pulses, in particular for carrying out a method according to any one of claims 1 through 10, with a call simulator (100) for simulating at least one calling analog terminal device (20) and for simulating at least one additional terminal device (30) that can be operated as the called terminal device, a first detector device (22) for detecting time pulses, a second detector device (34) for detecting a first predetermined event, in particular a CONNECT SIGNAL or a loop closure, corresponding to the measurable start of the test communications connection, wherein the first detector device (22) and/or the second detector device (34) is designed to detect a second predetermined event, in particular a DISCONNECT SIGNAL or a loop interruption, corresponding to the measurable end of the test communications connection, a first time measurement device (24) for measuring time pulse intervals of pairs of successive time pulses, a second time measurement device (50) for measuring the time separation between the occurrence of the first predetermined event and the reception of the first time pulse of a test communications connection that has been set up, a third time measurement device (55) for measuring the time separation between the occurrence of the second predetermined event and the reception of at least one time pulse after the measured end of the test communications connection, an analysis device (70) for comparing the measured time intervals of the respective time measurement devices with appropriate time ranges.

12. Testing device according to claim 11, **characterized in that** the analysis device (70) is designed to test whether the number of time pulses that have occurred after the end of the test communications connection is less than, greater than, or equal to a predetermined maximum number y of time pulses.

13. Testing device according to claim 11 or 12, **characterized by** a memory device (80) in which the systematic measurement error between the point (44) of the actual beginning of a test communications connection and the second detector device (34) is stored, in which the systematic measurement error between the point (42, 44) of the actual end of a test communications connection and the first or second detector device (22; 34) is stored, and in which the systematic measurement error between the point (42) of the actual generation of time pulses and the first detector device (22) of the testing device (10) is stored, and a correction device (90) connected to the memory device (80) for correcting the measured values from the first, second and third time measurement devices (24, 50, 55) by the applicable systematic measurement error, wherein the analysis device (70) is designed to compare the measured and corrected time intervals with corresponding predetermined time ranges.

14. Testing device according to any one of claims 11 through 13, **characterized in that** a device is provided for sequentially numbering successive time pulse intervals, **in that** the third time measurement device (55), in response to the numbers assigned to the time pulse intervals, can detect whether a time pulse interval has been measured in the first time measurement device (24) after the detection of the second predetermined event, in particular a DISCONNECT SIGNAL or a loop interruption, and **in that** the third time measurement device (55) or the analysis device (70) can add the value for the time separation between the end of the test communications connection and the first time pulse received after the end of the test communications connection to the values of all measured time pulse intervals whose numbers are greater than the number of the time pulse interval that has just been measured at the first or second detector device (22, 34) of the testing device (10) at the time of the occurrence of the second predetermined event, in particular a DISCONNECT SIGNAL or a loop interruption.

15. Testing device according to any one of claims 11 through 14, **characterized in that** the first detector device (22) is assigned to the calling analog terminal device (20), and **in that** the second detector device (34) is assigned to the called terminal device (30).

## Revendications

1. Procédé de vérification de la taxation d'une communication selon des intervalles d'impulsions d'horloge, un dispositif de vérification (10) pouvant simuler au moins un terminal analogique appelant (20) et au moins un terminal appelé (30) étant connecté à au moins un noeud de réseau (40) apte à produire des impulsions d'horloge, ledit procédé comportant les étapes suivantes :
- établissement et coupure d'au moins une communication d'essai prédéterminée par l'intermédiaire d'au moins un noeud de réseau (40) ;
- détermination de l'écart temporel entre le début de la communication d'essai et la production d'une première impulsion d'horloge et vérification si l'écart temporel obtenu se situe à l'intérieur d'une première plage temporelle prédéterminée ;
- pendant la durée de la communication d'essai, mesure et comparaison à un intervalle de temps prédéterminé d'intervalles d'impulsions d'horloge successives ; et
- vérification si, à la fin de la communication d'essai, au moins une autre impulsion d'horloge a été reçue, dans l'affirmative, détermination de l'écart temporel entre la fin de la communication d'essai et la au moins une impulsion d'horloge et vérification si l'écart temporel obtenu se situe à l'intérieur d'une seconde plage temporelle prédéterminée.

2. Procédé selon la revendication 1,
**caractérisé en ce qu'**on vérifie en plus si le nombre des impulsions d'horloge apparues après la fin de la communication d'essai est plus petit, plus grand ou égal à un nombre y maximal prédéterminé d'impulsions d'horloge.

3. Procédé selon la revendication 1 ou 2,
**caractérisé en ce que** l'écart temporel entre le début de la communication d'essai et la production de la première impulsion d'horloge est déterminé selon les étapes suivantes :
- détection, au niveau d'un premier point de mesure (34) prédéterminé du dispositif de vérification (10), de l'apparition d'un premier évènement prédéterminé, notamment d'un signal CONNECT ou d'une fermeture de boucle, qui correspond au début mesurable de la communication d'essai ;
- détection, au niveau d'un second point de mesure (22) prédéterminé du dispositif de vérification, de la réception de la première impulsion d'horloge de la communication d'essai produite par le noeud de réseau (40) ; et
- démarrage et arrêt d'une mesure du temps (50) en fonction de l'apparition détectée du premier évènement prédéterminé, notamment d'un signal CONNECT ou d'une fermeture de boucle, et de la réception de la première impulsion d'horloge.

4. Procédé selon la revendication 3,
**caractérisé en ce qu'**on détermine l'erreur de mesure systématique entre l'endroit (44) de l'apparition effective du début de la communication d'essai et le premier point de mesure (34) du dispositif de vérification (10), **en ce qu'**on détermine l'erreur de mesure systématique entre l'endroit (42) de la production effective de la première impulsion d'horloge et le second point de mesure du dispositif de vérification (10), **en ce qu'**on mesure l'écart temporel entre l'apparition détectée du premier évènement prédéterminé et la réception de la première impulsion d'horloge, **en ce qu'**on corrige ledit écart temporel de la valeur des erreurs de mesure systématiques, et **en ce qu'**on vérifie si l'écart temporel corrigé se situe à l'intérieur de la première plage temporelle prédéterminée.

5. Procédé selon l'une quelconque des revendications 1 à 4,
**caractérisé en ce qu'**on mesure les intervalles d'impulsions d'horloge successives selon les étapes suivantes :
- la première impulsion d'horloge qui arrive au terminal analogique appelant (20) démarre une première mesure du temps (24₁),
- chacune des impulsions d'horloge suivantes arrivant au terminal analogique appelant arrête la mesure du temps démarrée par l'impulsion d'horloge immédiatement précédente et démarre une nouvelle mesure du temps ;
- la dernière impulsion d'horloge de la communication d'essai démarre une i-ième mesure du temps (24ᵢ).

6. Procédé selon la revendication 5,
**caractérisé en ce qu'**un numéro d'ordre est affecté à chaque mesure du temps démarrée.

7. Procédé selon la revendication 6,
**caractérisé en ce qu'**on détermine l'écart temporel entre la fin de la communication d'essai et une première impulsion d'horloge reçue après la fin de la communication d'essai selon les étapes suivantes :
- démarrage d'une mesure du temps (55) à l'apparition, au niveau du premier ou du second point de mesure prédéterminé (34) du dispositif de vérification (10), d'un second évènement prédéterminé, notamment d'un signal DISCONNECT ou d'une interruption de boucle, qui correspond à la fin mesurable de la communication d'essai ;
- arrêt de la mesure du temps (55) démarrée par le second évènement prédéterminé, à la réception par le second point de mesure prédéterminé du dispositif de vérification de la première impulsion d'horloge après la fin de la communication d'essai ; et
- comparaison de la valeur de la mesure du temps (55) à la seconde plage temporelle prédéterminée.

8. Procédé selon la revendication 7,
**caractérisé en ce qu'**on détermine, à l'apparition, au niveau du premier ou du second point de mesure prédéterminé (34 ; 22) du dispositif de vérification (10), du second évènement prédéterminé, notamment d'un signal DISCONNECT ou d'une interruption de boucle, le numéro de la mesure du temps (24) en cours de l'intervalle de deux impulsions d'horloge successives ;
**en ce qu'**on détermine l'écart temporel entre la fin de la communication d'essai et d'autres impulsions d'horloge détectées après la fin de la communication d'essai selon les étapes suivantes :
addition de la valeur de la mesure du temps (55) pour déterminer l'écart temporel entre la fin de la communication d'essai et la première impulsion d'horloge reçue après la fin de la communication d'essai et de celles de l'ensemble des mesures du temps (24₁-24ᵢ) pour déterminer les intervalles d'impulsions d'horloge successives dont les numéros respectifs sont plus grands que le numéro de la mesure du temps détecté à l'apparition, au niveau du premier ou du second point de mesure prédéterminé (34 ; 22) du dispositif de vérification (10), du second évènement prédéterminé, notamment d'un signal DISCONNECT ou d'une interruption de boucle et comparaison desdites valeurs à la seconde plage temporelle prédéterminée.

9. Procédé selon la revendication 7 ou 8,
**caractérisé en ce qu'**on détermine l'erreur de mesure systématique entre l'endroit (42, 44) de l'apparition effective de la fin de la communication d'essai et le premier et/ou le second point de mesure du dispositif de vérification (10) et l'erreur de mesure systématique entre l'endroit (42) de la production effective d'impulsions d'horloge et le second point de mesure du dispositif de vérification (10),
**en ce qu'**on mesure l'écart temporel entre l'apparition du second évènement prédéterminé, notamment d'un signal DISCONNECT ou d'une interruption de boucle, et la réception de la première impulsion d'horloge apparue après la fin de la communication d'essai et on corrige ledit écart temporel de la valeur des erreurs de mesure systématiques.

10. Procédé selon l'une quelconque des revendications 3 à 9,
**caractérisé en ce que** le premier point de mesure est défini par le terminal appelé (30), et **en ce que** le second point de mesure est défini par le terminal analogique appelant (20), la communication d'essai pouvant être coupée au niveau des deux terminaux (20, 30).

11. Dispositif de vérification destiné à être connecté à au moins un noeud de réseau (40) à vérifier et apte à émettre des impulsions d'horloge, notamment pour la mise en oeuvre d'un procédé selon l'une quelconque des revendications 1 à 10, comportant un simulateur d'appel (100) pour simuler au moins un terminal analogique appelant (20) et pour simuler au moins un autre terminal (30) apte à fonctionner comme terminal appelé, un premier dispositif de détection (22) pour détecter des impulsions d'horloge,
un second dispositif de détection (34) pour détecter un premier évènement prédéterminé, notamment un signal CONNECT ou une fermeture de boucle, qui correspond au début mesurable d'une communication d'essai,
le premier et/ou le second dispositif de détection (22 ; 34) étant réalisés pour détecter un second évènement prédéterminé, notamment un signal de DISCONNECT ou une interruption de boucle, qui correspond à la fin mesurable d'une communication d'essai, un premier dispositif de mesure du temps (24) pour mesurer des intervalles d'impulsions d'horloge de deux impulsions d'horloge successives respectivement,
un deuxième dispositif de mesure du temps (50) pour mesurer l'écart temporel entre l'apparition du premier évènement prédéterminé et la réception de la première impulsion d'horloge d'une communication d'essai établie,
un troisième dispositif de mesure du temps (55) pour mesurer l'écart temporel entre l'apparition du second évènement prédéterminé et la réception d'au moins une impulsion d'horloge après la fin mesurée de la communication d'essai,
un dispositif d'évaluation (70) pour comparer les temps mesurés par les dispositifs de mesure du temps respectifs à des plages temporelles correspondantes prédéterminées.

12. Dispositif de vérification selon la revendication 11,
**caractérisé en ce que** le dispositif d'évaluation (70) est réalisé de manière à vérifier si le nombre des impulsions d'horloge apparues après la fin de la communication d'essai est plus petit, plus grand ou égal à un nombre y maximal prédéterminé d'impulsions d'horloge.

13. Dispositif de vérification selon la revendication 11 ou 12,
**caractérisé par** un dispositif de mémoire (80) dans lequel est stockée l'erreur de mesure systématique entre l'endroit (44) du début effectif d'une communication d'essai et le second dispositif de détection (34), dans lequel est stockée l'erreur de mesure systématique entre l'endroit (42, 44) de la fin effective d'une communication d'essai et le premier ou le second dispositif de détection (22 ; 34), et dans lequel est stockée l'erreur de mesure systématique entre l'endroit (42) de la production effective d'impulsions d'horloge et le premier dispositif de détection (22) du dispositif de vérification (10),
un dispositif de correction (90) relié au dispositif de mémoire (80) pour corriger les valeurs mesurées par le premier, le deuxième et le troisième dispositif de mesure du temps (24, 50, 55) de la valeur respective de l'erreur de mesure systématique,
le dispositif d'évaluation (70) comportant des plages temporelles prédéterminées correspondantes pour comparer les temps mesurés aux temps corrigés.

14. Dispositif de vérification selon l'une quelconque des revendications 11 à 13,
**caractérisé en ce qu'**un dispositif de numérotation en continu d'intervalles d'impulsions d'horloge successifs est prévu,
**en ce que** le troisième dispositif de mesure du temps (55) peut détecter, en réponse aux numéros affectés aux intervalles d'impulsions d'horloge, si un intervalle d'impulsion d'horloge a été mesuré dans le premier dispositif de mesure du temps (24) après la détection du second évènement prédéterminé, notamment d'un signal DISCONNECT ou d'une interruption de boucle,
et **en ce que** le troisième dispositif de mesure du temps (55) ou le dispositif d'évaluation (70) peut additionner la valeur de l'écart temporel entre la fin de la communication d'essai et la première impulsion d'horloge reçue après la fin de la communication d'essai et celles de l'ensemble des intervalles d'impulsions d'horloge mesurés dont les numéros sont plus grands que le numéro en cours de l'intervalle d'impulsions d'horloge mesuré à l'apparition, au niveau du premier ou du second dispositif de détection (22, 34) du dispositif de vérification (10), du second évènement prédéterminé, notamment d'un signal DISCONNECT ou d'une interruption de boucle.

15. Dispositif de vérification selon l'une quelconque des revendications 11 à 14,
**caractérisé en ce que** le premier dispositif de détection (22) est affecté au terminal analogique appelant (20) et **en ce que** le second dispositif de détection (34) est affecté au terminal appelé (34).
